# EUROPEAN PATENT APPLICATION

(11) **EP 4 663 823 A1**
(43) Date of publication of application: **17.12.2025**
(21) Application number: 23920765.7
(22) Date of filing: 31.10.2023
(51) Int. Cl.: D01F 6/92, D01F 1/10, C08G 77/445, C08G 77/42

(54) **METHOD FOR PREPARING POLYESTER FIBER UNEASY TO PRODUCE MICROPLASTICS DURING USE**

(30) Priority: 07.02.2023 CN 202310076177
(71) Applicant: Jiangsu Hengli Chemical Fibre Co., Ltd., Wujiang, Jiangsu 215226 (CN)
(72) Inventor: WANG, Lili, Suzhou, Jiangsu 215226 (CN); YIN, Lixin, Suzhou, Jiangsu 215226 (CN); TANG, Fangming, Suzhou, Jiangsu 215226 (CN); ZHANG, Ye, Suzhou, Jiangsu 215226 (CN); WANG, Xue, Suzhou, Jiangsu 215226 (CN); LIU, Shasha, Suzhou, Jiangsu 215226 (CN)
(74) Representative: Franks & Co Limited
(86) International application number: PCT/CN2023/128240
(87) International publication number: WO 2024/164573

(57) **Abstract**

A method for preparing a polyester fiber uneasy to produce microplastics during use is provided. The method includes that mixing fiber-grade polyester with a self-healing polymer, and then carrying out melt extrusion, cooling, curing, oiling, and stretching processes to prepare a polyester fiber uneasy to produce microplastics during use; wherein the self-healing polymer is a block copolymer having an ordered structure and is composed of non-ionic polyester chain segments, ionic polyester chain segments and polysiloxane chain segments; both different types of chain segments and the same type of chain segments in the non-ionic polyester chain segments, ionic polyester chain segments and polysiloxane chain segments are linked by ester bonds, and two ends of the polysiloxane chain segment are hydroxyl-terminated. This invention introduces self-healing polymers into the polyester spinning melt, designs and develops polyester fiber materials with self-healing properties, which on the one hand, improves the wear resistance of the fiber material, and on the other hand, self-healing in response to possible damage during use, thereby significantly suppressing the microplastics in the fiber.

## Description

### Technical Field

The present invention belongs to the technical field of polyester fibers, and more particularly, relates to a method for preparing a polyester fiber uneasy to produce microplastics during use.

### Background

Polyester fiber, as a fundamental raw material for textiles, plays a vital role in the national economy. However, with growing environmental awareness in recent years, studies have revealed that 60% of microplastics in our freshwater come from laundry fibers. Ultrafine fibers shed when we ish clothes and eventually enter istewater treatment facilities, from where they enter lakes and other large bodies of water. Natural materials also shed fibers in ishers and dryers, but microorganisms can digest them, whereas fibers from synthetic textiles cannot. These fibers are non-biodegradable and can remain in ecosystems for centuries. Once released into the wild, microplastic particles not only harm the environment but can also be ingested by aquatic and marine life, posing physical hazards to the organisms themselves. Furthermore, because microplastics are not easily degradable, they easily accumulate in various organisms and pass through the food chain, potentially causing harmful effects on human health.

Plastics with a particle size of less than 5mm are usually defined as microplastics, among which microplastics derived from textiles are generally called fiber microplastics. Fiber microplastics are an important form of microplastics and fall into the category of environmental pollutants. Polymer microfibers are the main source of microplastic pollution, especially in oceans, riverbanks and coastal areas. Such microfibers appear to be mainly derived from commercial and household ishing or other cleaning processes of textiles, in the form of clothing, bedding, soft furniture, carpets, etc. How to reduce the shedding of polyester fibers, which are the basic raw materials for textiles, during the ishing process is an important development direction. Given that China is a major textile country and plays an important role in the global textile and fiber processing industry chain, studying fiber microplastics will help promote the healthy and sustainable development of my country's textile and chemical fiber industry.

To investigate methods and strategies for reducing fiber microplastics, it's necessary to understand the primary causes of these microplastics. It's generally believed that physical wear and tear during the service life of textiles, as well as the ishing and maintenance processes, are major contributors to the generation of these microplastics. During the ishing process, fiber products, exposed to multiple factors such as heat and force, experience wear and tear, leading to the shedding of these microplastics. These microplastics can be found in loose fibers within textiles; broken fiber segments, particularly fiber ends; and abrasive particles on fiber surfaces. All of these microplastics are likely generated by wear and tear during use, as well as damage sustained within or on textiles during the ishing/cleaning process itself.

The journal *Carbohydrate Polymers* reported a technology that addresses the problems of surface wear and shedding of large amounts of fiber microplastics caused by mechanical ishing by coating polyimide fabrics. Chinese invention patent CN114364830A discloses environmentally friendly polyester fibers and microfiber anti-shedding polyester textiles, comprising a core-sheath bicomponent polyester fiber with a core and sheath domain, and a single-component polyester fiber at least partially coated with an anti-shedding coating. Simultaneously, a certain amount of anti-shedding additives, including lubricants, impact modifiers, crosslinkers, chain extenders, crystallization modifiers, or combinations thereof, is also introduced into the spinning melt. Chinese invention patent CN113668092A relates to a polyester fiber and a method for preparing the same, comprising blending a functional masterbatch with polyester and then melt-spinning the resulting polyester fiber. The functional masterbatch is prepared by mixing a branched esterification product with a modified component slurry containing a hydroxyl-terminated polysiloxane, followed by a polycondensation reaction. The functional masterbatch exhibits excellent fluidity. Functional masterbatch is blended with filament melt to produce polyester fiber with a sheath-core structure, with the sheath being the functional masterbatch and the core being polyester. The fiber utilizes the polysiloxane in the sheath to reduce the fiber's friction coefficient, thereby improving the fiber's wear resistance.

From the above publicly available information, it can be seen that in order to achieve the reduction of fiber microplastics, the main method is to reduce the microplastics formed during the use of fiber materials by coating or increasing the spinning melt strength or reducing the wear resistance of the fiber surface. In addition, there are reports on the development of biodegradable polyester fibers, which can degrade the microplastics formed during the ishing and shedding process as much as possible, thereby reducing pollution to the environment. Although it is possible to achieve biodegradation of fiber materials used in certain specific fields under specific conditions after disposal, the mechanical properties of existing biodegradable polyester fibers are generally low, and fiber microplastics are more likely to be formed in the short term. When discharged into the water system, especially the deep sea, there are no conditions for biological composting and degradation, and it is difficult to achieve true biodegradability.

Therefore, the present invention designs and develops a polyester fiber material with self-healing properties, which on the one hand improves the wear resistance of the fiber material, and on the other hand, it can self-heal in response to possible damage during use, thereby significantly suppressing the microplastics in the fiber.

### Summary

The present invention aims to address the aforementioned problems existing in the prior art by providing a method for preparing a polyester fiber uneasy to produce microplastics during use. The present invention prepares polyester fibers low in microplastics by mixing fiber-grade polyester with a self-healing polymer in a certain proportion, followed by melt extrusion, cooling, solidification, oiling, and stretching. The self-healing polymer is composed of ionic polyester chain segments, nonionic polyester chain segments, and polysiloxane chain segments. The nonionic polyester chain segments and ionic polyester chain segments are synthesized through an esterification reaction, and then subjected to a polycondensation reaction. The present invention can reduce the friction coefficient of the polyester fiber and ensure that the polyester fiber can self-heal in response to damage.

To this end, the technical schemes of the invention are as follows:

A method for preparing a polyester fiber uneasy to produce microplastics during use, includes that mixing a fiber-grade polyester with a self-healing polymer, and then carrying out melt extrusion, cooling, curing, oiling, and stretching processes to prepare a polyester fiber uneasy to produce microplastics during use;

wherein the self-healing polymer is a block copolymer having an ordered structure and is composed of non-ionic polyester chain segments, ionic polyester chain segments and polysiloxane chain segments; both different types of chain segments and the same type of chain segments in the non-ionic polyester chain segments, ionic polyester chain segments and polysiloxane chain segments are linked by ester bonds;

wherein two ends of the polysiloxane chain segment are hydroxyl-terminated.

The following preferred technology program is presented to give a detailed description for this invention:
The said method for preparing a polyester fiber uneasy to produce microplastics during use, wherein the fiber-grade polyester is polyethylene terephthalate, polypropylene terephthalate, polybutylene terephthalate or a modified copolyester, and the mass fraction of polyester in the modified copolyester is ≥80%; wherein the intrinsic viscosity of the fiber-grade polyester is 0.60-1.25 dl/g.

The said method for preparing a polyester fiber uneasy to produce microplastics during use, wherein the total number of blocks in the self-healing polymer is 5-12, the intrinsic viscosity is 0.40-0.80 dl/g, the half-crystallization time t_{1/2} is 1.5-5.0 min, and the crystallization enthalpy is 20-40 J/g.

The said method for preparing a polyester fiber uneasy to produce microplastics during use, wherein the repeating units of nonionic polyester chain segments are 4-10, the repeating units of the ionic polyester chain segment are 2-8, and the repeating units of the polysiloxane chain segment are 2-10. The number of repeating units in these segments affects the structure and properties of the self-healing polymer. Exceeding the specified repeating unit count for the three segments can affect the regularity of the healing polymer's chemical structure, which in turn can affect its thermal and processing properties. Consequently, when the healing polymer is incorporated into the fiber, the fiber's self-healing ability is affected, resulting in a decrease in its ability to inhibit microplastics. A nonionic polyester chain segment with fewer than 4 repeating units, i.e., an ester of a dicarboxylic acid and a diol, has a shorter sequence unit. At the same molecular weight, the nonionic polyester chain segment has a higher molar count, resulting in increased randomness in the synthesized polymer. If the repeating unit is higher than 10, the activity of the non-ionic polyester chain segment will decrease during further reaction, and it will be more difficult to copolymerize with the ionic polyester chain segment, which will lead to a decrease in the self-healing ability of the polymer. If the repeating unit of the ionic polyester chain segment is lower than 2, that is 1, the randomness of the synthesized polymer will increase. If the repeating unit is higher than 8, the self-healing ability of the synthesized polymer will decrease after being damaged during use after being introduced into the fiber. The effect of the number of repeating units of polysiloxane on the self-healing ability of the fiber is similar to that of the ionic polyester chain segment.

The said method for preparing a polyester fiber uneasy to produce microplastics during use, wherein the preparation method of the self-healing polymer comprises: firstly synthesizing a nonionic polyester ester and an ionic polyester ester by an esterification reaction respectively, then mixing the nonionic polyester ester and the ionic polyester ester with a polysiloxane and subjecting the mixture to a polycondensation reaction to obtain a copolyester, namely the self-healing polymer.

The said method for preparing a polyester fiber uneasy to produce microplastics during use, wherein the nonionic polyester ester is prepared by an esterification reaction of a dicarboxylic acid I and a diol I;
wherein the molar ratio of dicarboxylic acid I to diol I is 1:(1.05-1.50);
wherein the dicarboxylic acid I is terephthalic acid, isophthalic acid or adipic acid;
wherein the diol I is ethylene glycol, propylene glycol, butylene glycol or pentanediol;
wherein the catalyst for the esterification reaction is titanium glycolate, tetrabutyl titanate, antimony glycolate, antimony acetate or antimony oxide, and the amount used is 10-100 ppm based on the mass of dicarboxylic acid I;
wherein the esterification reaction is carried out at a temperature of 150-250 °C, a pressure of 0.01-0.5 MPa, and a time of 1.5-3.5 h.

The said method for preparing a polyester fiber uneasy to produce microplastics during use, wherein the ionic polyester ester is prepared by a staged esterification reaction of a dicarboxylic acid II and a diol II;
wherein a molar ratio of the number of carboxyl functional groups of dicarboxylic acid II added in the first stage esterification reaction to the number of hydroxyl functional groups of diol II is 1.05-1.50; in the second stage esterification reaction, only diol II is added, and the amount added is 0.1-0.6 of the molar amount of dicarboxylic acid II added in the first stage esterification reaction;
wherein the dicarboxylic acid II is sodium 5-sulfoisophthalate, sodium 2-sulfoterephthalate or potassium 8-bis(2-hydroxyethoxy) carbonylanthraceneoxaphosphite;
wherein the diol II is potassium 2,5-dihydroxybenzenesulfonate, sodium N,N-bis(2-hydroxyethyl)-2-aminoethanesulfonate, sodium 2-[(tris(hydroxymethyl)methyl)amino]-1-ethanesulfonate or sodium 3-[N-tris(hydroxymethyl)methylamino]-2-hydroxypropanesulfonate;
wherein a catalyst for the staged esterification reaction is benzenesulfonic acid, added during the first stage esterification reaction at a dosage of 10-100 ppm based on the mass of dicarboxylic acid II;
wherein the first stage esterification reaction is carried out at a temperature of 220-250 °C, a pressure of 0.05-0.5 MPa, and a time of 3.0-5.0 h;
wherein the second stage esterification reaction is carried out at a temperature of 240-260 °C, a pressure of 0.1-0.5 MPa, and a time of 0.5-1.0 h.

The said method for preparing a polyester fiber uneasy to produce microplastics during use, based on the total mass of the nonionic polyester ester, the ionic polyester ester and the polysiloxane, the amount of the ionic polyester ester added is 5-20%, and the amount of the polysiloxane added is 5-30%.

The said method for preparing a polyester fiber uneasy to produce microplastics during use, wherein the polycondensation reaction is divided into a pre-polycondensation reaction and a final polycondensation reaction;
wherein the pre-polycondensation reaction is carried out at a temperature of 240-260 °C, a time of 0.1-1.0 h, and a pressure of 500-1000 Pa;
wherein the final polycondensation reaction is carried out at a temperature of 260-285 °C, a time of 1.5-3.0 h, and a pressure of 0-100 Pa;
wherein the polycondensation catalyst is tetrabutyl titanate, titanium glycol, antimony trioxide, antimony glycol or antimony acetate, added before the pre-polycondensation reaction in an amount of 50-500 ppm of the total mass of the ionic polyester ester and the non-ionic polyester ester.

The said method for preparing a polyester fiber uneasy to produce microplastics during use, wherein the amount of the self-healing polymer used is 1-10% of the mass of the fiber-grade polyester.

The said method for preparing a polyester fiber uneasy to produce microplastics during use, wherein the polyester fiber uneasy to produce microplastics during use has a single filament fineness of 1.5-5.0 dtex, and oil-free filaments has an intrinsic viscosity drop of 0.02-0.10 dl/g (oil-free filaments refer to fibers that have not been oiled after melt extrusion, cooling, and air blowing; the intrinsic viscosity drop refers to the difference between the intrinsic viscosity of the oil-free filaments and the intrinsic viscosity of the spun polyester, which can reflect the thermal stability of the melt);
wherein the polyester fiber uneasy to produce microplastics during use has a breaking strength ≥4.5cN/ dtex, and an elongation at break of 15-35%;
wherein the polyester fiber uneasy to produce microplastics during use has a static friction coefficient ≤0.20, and a dynamic friction coefficient ≤0.40;
wherein the polyester fiber uneasy to produce microplastics during use has a self-healing rate of 0.1-1.0 µm/min, resulting in a 50-95% reduction in fiber microplastics during ishing compared to polyester fibers prepared without self-healing polymers.

### Principle of the Invention

Prior art approaches to reducing fiber microplastics primarily involve coating, increasing the spinning melt strength, or reducing the fiber surface's abrasion resistance, thereby reducing the microplastics formed during fiber use. However, the durability of the coating is problematic, affecting the softness of the coated textile. Improving the spinning melt strength or reducing the fiber surface's abrasion resistance can only achieve limited reductions in fiber microplastics. The present invention designs and develops a polyester fiber material with self-healing properties. While this improves the fiber's abrasion resistance, it also allows for self-healing of any damage that may occur during use, significantly suppressing fiber microplastics.

The core of the present invention is to introduce a self-healing polymer into the polyester spinning melt. The self-healing polymer is composed of an ionic polyester chain segment, a non-ionic polyester chain segment, and a polysiloxane chain segment. The non-ionic polyester ester and the ionic polyester ester are synthesized by esterification reaction, and then generated by polycondensation reaction. The ionic polyester chain segment, the non-ionic polyester chain segment, and the polysiloxane chain segment are all low-molecular-weight hydroxyl-terminated intermediates. By controlling the mixing ratio and regulating the polymerization process, a block-type ordered copolyester is prepared. The macromolecular structure is orderly, and the self-healing polymer has a certain degree of crystallization, which ensures that the thermal performance requirements can be dried before spinning. The segments in the prepared self-healing polymer are all connected by ester bonds and contain a large number of ester bond functional groups, which also ensures good compatibility with the spinning polyester melt. The self-healing polymer has a high molecular weight and has excellent blending compatibility when introduced into the polyester melt for blending. It has an "alloy" structural characteristic, which ensures good mechanical properties of the fiber.

The self-healing polymer introduced into the polyester spinning melt in this invention is essentially an ionic polymer (also known as an ionomer), which incorporates sulfonate or phosphate ionic bonds into the polymer side chains. The basic structural units of the ionomer backbone are typically composed of hydrophobic groups such as C-H-O. The introduction of hydrophilic ionic groups causes microphase separation between the ionomer backbone and the ionic side groups, forming nanoscale ionic clusters that act as physical crosslinks. The strong Coulombic forces between the ionic groups within the ionomer molecular chains cause microphase separation and the formation of nanoscale ionic clusters, endowing the ionomer with a unique molecular chain structure and macroscopic properties. The physical crosslinking within the ionomer can significantly improve the polymer's melt strength, mechanical strength, toughness, and tear resistance. This physical crosslinking also possesses exceptional properties. At relatively low temperatures (operating temperatures), crosslinking forms a three-dimensional network structure, enhancing material performance. At higher temperatures (processing temperatures), the high temperatures disrupt the aggregation of ionic clusters and the crosslinking, making the material easier to process. The effect of ionic bonds improves the wear resistance of fibers. At the same time, when the spun fiber material is damaged by force during external ishing or use, there is a strong Coulomb force between the ionic groups in the self-healing polymer, and the damaged parts will self-heal, thereby preventing further aggravation of wear and inhibiting the formation of fiber microplastics.

The self-healing polymer contains polysiloxane chain segments. Polysiloxane has the advantages of low surface energy and good lubricity. When introduced into the fiber material, it reduces the friction resistance of the polyester fiber and improves the wear resistance of the polyester fiber. The introduced polysiloxane reduces the friction coefficient of the fiber, which means that the probability of fiber damage in situations such as fiber-to-fiber and fiber-to-ishing machine is reduced. At the same time, the polysiloxane component mainly on the fiber surface has good wear resistance and is less likely to be worn and broken under the same mechanical force; at the same time, polysiloxane also has a certain hydrophobic effect, which reduces the contact between polyester fibers and water during the ishing process. The hydrophobic effect slows down the combination of water molecules and ester bonds in the fiber, greatly reducing the hydrolysis of ester bonds, so that the strength of the fiber can be maintained, thereby reducing the amount of microplastics formed during the ishing process.

In summary, the self-healing polymer introduced into the polyester spinning melt is composed of ionic polyester chain segments, nonionic polyester chain segments, and polysiloxane chain segments. The nonionic polyester chain segments are similarly compatible with the spinning melt, ensuring compatibility between the self-healing polymer and the melt. The ionic polyester chain segments form nanoscale ionic clusters, acting as physical crosslinks. Strong Coulombic forces between the ionic groups within the ionic polymer (ionomer) molecular chains cause microphase separation and the formation of nanoscale ionic clusters, endowing the ionomer with unique molecular chain structure and macroscopic properties. The physical crosslinking within the ionomer significantly improves the polymer's melt strength, mechanical strength, toughness, and tear resistance. The polysiloxane chain segments exhibit hydrophobic and low-friction properties, further enhancing the fiber's ability to inhibit microplastic formation. The three segments interact with each other to create a significant synergistic effect, ensuring the self-healing polymer's inherent crystallinity. This ensures good compatibility and spinnability when introduced into polyester, and the fiber's ability to inhibit microplastic formation during use.

### Benefits:

(1) The present invention enhances the ability of the spun fiber to inhibit the formation of microplastics by adding the prepared self-healing polymer blend to the polyester spinning melt. This is based on improving the wear resistance of the fiber material and at the same time, self-healing is carried out to significantly inhibit the formation of fiber microplastics in response to possible damage during use. The operation is simple and flexible. The self-healing polymer has an orderly macromolecular structure and a certain degree of crystallization, which ensures that the thermal performance requirements can be met before spinning.
(2) The present invention provides a method for preparing polyester fibers that are less likely to produce microplastics during use, wherein the self-healing polymer is prepared by ester exchange reaction of ionic polyester chain segments, nonionic polyester chain segments and polysiloxane chain segments, and the molecular chain contains a large number of ester bond functional groups, which ensures good compatibility and spinnability with the spinning polyester melt.

### Detailed Description Of The Embodiments

Based on above mentioned method, the following embodiments are carried out for further demonstration in the present invention. It is to be understood that these embodiments are only intended to illustrate the invention and are not intended to limit the scope of the invention. In addition, it should be understood that after reading the contents described in the present invention, those technical personnel in this field can make various changes or modifications to the invention, and these equivalent forms also fall within the scope of the claims attached to the application.

The material used in the present invention is as follows:
(1) polysiloxane: sourced from Anhui Mingyi Silicon Industry Co., Ltd., trade name MY1203M;
(2) (2) modified copolyester: sourced from Sinopec Yizheng Chemical Fiber Co., Ltd., with the trade name HS550; the mass fraction of polyester in the modified copolyester is 84 %.

The process parameters applied in the melt extrusion, cooling, curing, oiling, and stretching steps across the various examples of the present invention are as follows:
The process parameters for fiber forming are: cooling air temperature of 22 °C, relative humidity of 85 %, wind pressure of 40 kPa, oiling rate of 1.0 %, speed of hot roller GR1 of 1250 m/min, temperature of 95°C, speed of hot roller GR2 of 4200 m/min, temperature of 125°C.

The testing method applied in the present invention is as follows:
(1) half-crystallization time t_{1/2}: Samples were tested using a TA Q-20 DSC (USA); before testing, the samples were vacuum dried at 135°C for 24 hours; under a nitrogen atmosphere, the heating rate is 10°C/min, the test temperature is raised from 25 °C to 300 °C, held for 3 minutes to eliminate thermal history, and then cooled from 300 °C to 25 °C; the peak that appeared during the cooling process from 300 °C to 25 °C is called the cooling crystallization peak, and the temperature corresponding to the peak is the cooling crystallization temperature. The crystallization time is the time required for the sample to crystallize completely, from the beginning to the completion of crystallization, and the half-crystallization time t_{1/2} is the time corresponding to 50% crystallinity.
(2) crystallization enthalpy: Samples were tested using a TA Q-20 DSC (USA); before testing, the samples were vacuum dried at 135 °C for 24 hours; under a nitrogen atmosphere, the heating rate is 10 °C/min, the test temperature is raised from 25 °C to 300 °C, held for 3 minutes to eliminate thermal history, and then cooled from 300 °C to 25 °C; the peak that appears during the cooling process from 300 °C to 25 °C is called the cooling crystallization peak, and the temperature corresponding to the peak is the cooling crystallization temperature. The cooling crystallization process is an exothermic process, and the total heat released per unit mass of sample from the start to the end of crystallization is the crystallization enthalpy.
(3) intrinsic viscosity of oil-free filaments: The intrinsic viscosity of the ionic polyester masterbatch carrier is tested according to GB/T 14190-2017; in the following examples of the present invention, the mass ratio of phenol to 1,1,2,2-tetrachloroethane is selected as 50:50 for testing;
(4) breaking strength: Testing according to the dry breaking strength test specified in GB/T 14344-2008 *"Testing method for tensile of man-made filament yarns";*
(5) elongation at break: Testing according to the dry elongation at break specified in GB/T 14344-2008 *"Testing method for tensile of man-made filament yarns";*
(6) static friction coefficient: Testing according to T/CSTM 00522-2022 *"Testing method of friction coefficient of man-made staple fibers";*
(7) dynamic friction coefficient: Testing according to T/CSTM 00522-2022 *"Testing method of friction coefficient of man-made staple fibers";*
(8) self-healing rate: Use a sharp blade to cut an 8 µm wide scratch on the sample surface, then place the sample on a hot stage and perform scratch self-repair at 80 °C; observe the scratch repair process under a polarizing microscope and record the time it takes for the surface scratch to be completely repaired, thereby calculating the self-healing rate.

### Example 1

A method for preparing a polyester fiber uneasy to produce microplastics during use, including the following steps:
(1) at a temperature of 250 °C and a pressure of 0.5 MPa, terephthalic acid and ethylene glycol with a molar ratio of 1:1.05 are esterified for 1.5 h to obtain a nonionic polyester ester;
   wherein the catalyst for the esterification reaction is titanium glycolate, and its dosage is 10 ppm based on the mass of terephthalic acid;
(2) sodium 5-sulfoisophthalate and potassium 2,5-dihydroxybenzenesulfonate are subjected to a staged esterification reaction to prepare an ionic polyester ester;
   wherein the first stage esterification reaction is carried out at a temperature of 220 °C, a pressure of 0.05 MPa, and a time of 3 h; the second stage esterification reaction is carried out at a temperature of 260 °C, a pressure of 0.1 MPa, and a time of 0.8 h;
   the molar ratio of the number of carboxyl functional groups of sodium 5-sulfoisophthalate added in the first stage esterification reaction to the number of hydroxyl functional groups of potassium 2,5-dihydroxybenzenesulfonate is 1.05; in the second stage esterification reaction, only potassium 2,5-dihydroxybenzenesulfonate is added in an amount that is 0.1 of the molar amount of sodium 5-sulfoisophthalate added in the first stage esterification reaction; and in the first stage esterification reaction, benzenesulfonic acid is added as a catalyst in an amount of 10 ppm based on the mass of sodium 5-sulfoisophthalate;
(3) after mixing the nonionic polyester ester obtained in step (1) and the ionic polyester ester obtained in step (2) with polysiloxane, tetrabutyl titanate is added, and a pre-polycondensation reaction is carried out at a temperature of 240 °C and a pressure of 1000 Pa for 0.1 h, and then a final polycondensation reaction is carried out at a temperature of 285 °C and a pressure of 0 Pa for 1.5 h to obtain a self-healing polymer;
   wherein, based on the total mass of non-ionic polyester ester, ionic polyester ester and polysiloxane, the addition amount of ionic polyester ester is 15%, the addition amount of polysiloxane is 30%, and the addition amount of polycondensation catalyst is 500 ppm of the total mass of ionic polyester ester and non-ionic polyester ester;
   the prepared self-healing polymer is a block copolymer with an ordered structure, consisting of non-ionic polyester chain segments, ionic polyester chain segments and polysiloxane chain segments. The different segments in the non-ionic polyester chain segments, ionic polyester chain segments and polysiloxane chain segments, as well as the same segments, are connected by ester bonds. The two ends of the polysiloxane chain segments are terminated with hydroxyl groups;
   the self-healing polymer has a total of 12 blocks, an intrinsic viscosity of 0.80 dl/g, a half-crystallization time t_{1/2} of 5 min, and a crystallization enthalpy of 20 J/g; the nonionic polyester chain segment has 4 repeating units, the ionic polyester chain segment has 6 repeating units, and the polysiloxane chain segment has 10 repeating units;
(4) after mixing polyethylene terephthalate having an intrinsic viscosity of 0.60 dl/g with the self-healing polymer obtained in step (3), a polyester fiber uneasy to produce microplastics during use is prepared according to a process of melt extrusion, cooling, curing, oiling, and stretching;
   wherein the amount of self-healing polymer is 1% of the mass of fiber-grade polyesters;
   wherein the polyester fiber uneasy to produce microplastics during use has a single-filament fineness of 1.5 dtex, the oil-free intrinsic viscosity is reduced to 0.02 dl/g, the breaking strength is 4.9 cN/dtex, the elongation at break is 15%, the static friction coefficient is 0.2, the dynamic friction coefficient is 0.4, and the self-healing speed is 0.1 µm/min; compared with polyester fibers prepared without adding self-healing polymers, the microplastics in the fibers decrease by 50 % during washing.

### Example 2

A method for preparing a polyester fiber uneasy to produce microplastics during use, including the following steps:
(1) at a temperature of 240 °C and a pressure of 0.4 MPa, isophthalic acid and propylene glycol with a molar ratio of 1:1.50 are esterified for 3.5 h to obtain a nonionic polyester ester.
   wherein the catalyst for the esterification reaction is tetrabutyl titanate, and its dosage is 30 ppm based on the mass of isophthalic acid;
(2) sodium 2-sulfonate of terephthalic acid and sodium N,N-bis(2-hydroxyethyl)-2-aminoethanesulfonate are subjected to a staged esterification reaction to prepare an ionic polyester ester;
   wherein the first stage esterification reaction is carried out at a temperature of 250 °C, a pressure of 0.5 MPa, and a time of 3.5 h; the second stage esterification reaction is carried out at a temperature of 250 °C, a pressure of 0.2 MPa, and a time of 0.6 h;
   the molar ratio of the number of carboxyl functional groups of sodium 2-sulfoterephthalate added in the first stage esterification reaction to the number of hydroxyl functional groups of sodium N,N-bis(2-hydroxyethyl)-2-aminoethanesulfonate is 1.5; in the second stage esterification reaction, only sodium N,N-bis(2-hydroxyethyl )-2-aminoethanesulfonate is added in an amount that is 0.2 of the molar amount of sodium 2-sulfoterephthalate added in the first stage esterification reaction; and benzenesulfonic acid is added as a catalyst in the first stage esterification reaction in an amount of 100 ppm based on the mass of sodium 2-sulfoterephthalate.
(3) after mixing the nonionic polyester ester obtained in step (1) and the ionic polyester ester obtained in step (2) with polysiloxane, titanium glycolate is added, and a pre-polycondensation reaction is carried out at a temperature of 260 °C and a pressure of 500 Pa for 1 h, and then a final polycondensation reaction is carried out at a temperature of 280 °C and a pressure of 100 Pa for 3 h to obtain a self-healing polymer;
   wherein, based on the total mass of non-ionic polyester ester, ionic polyester ester and polysiloxane, the addition amount of ionic polyester ester is 10%, the addition amount of polysiloxane is 5%, and the addition amount of polycondensation catalyst is 50 ppm of the total mass of ionic polyester ester and non-ionic polyester ester;
   the prepared self-healing polymer is a block copolymer with an ordered structure, consisting of non-ionic polyester chain segments, ionic polyester chain segments and polysiloxane chain segments. The different segments in the non-ionic polyester chain segments, ionic polyester chain segments and polysiloxane chain segments, as well as the same segments, are connected by ester bonds. The two ends of the polysiloxane chain segments are terminated with hydroxyl groups.
   the self-healing polymer has a total of 5 blocks, an intrinsic viscosity of 0.40 dl/g, a half-crystallization time t_{1/2} of 1.5 min, and a crystallization enthalpy of 40 J/g; the nonionic polyester chain segment has 10 repeating units, the ionic polyester chain segment has 4 repeating units, and the polysiloxane chain segment has 2 repeating units;
(4) after mixing polytrimethylene terephthalate having an intrinsic viscosity of 0.9 dl/g with the self-healing polymer obtained in step (3), a polyester fiber uneasy to produce microplastics during use is prepared according to a process of melt extrusion, cooling, curing, oiling, and stretching;
   wherein the amount of self-healing polymer is 10% of the mass of fiber-grade polyesters;
   wherein the polyester fiber uneasy to produce microplastics during use has a single-filament fineness of 5 dtex, the oil-free intrinsic viscosity is reduced to 0.1 dl/g, the breaking strength is 4.5 cN/dtex, the elongation at break is 35%, the static friction coefficient is 0.19, the dynamic friction coefficient is 0.36, and the self-healing speed is 0.49 µm /min; compared with polyester fibers prepared without adding self-healing polymers, the microplastics in the fibers decrease by 75% during washing.

### Example 3

A method for preparing a polyester fiber uneasy to produce microplastics during use, including the following steps:
(1) at a temperature of 180°C and a pressure of 0.3 MPa, adipic acid and butanediol with a molar ratio of 1:1.20 are esterified for 2 h to obtain a nonionic polyester ester;
   wherein the catalyst for the esterification reaction is antimony glycol, and its dosage is 100ppm based on the mass of adipic acid;
(2) potassium 8-bis(2-hydroxyethoxy)carbonylanthracene oxaphosphite and sodium 2-[(tris(hydroxymethyl)methyl)amino]-1-ethanesulfonate are subjected to a staged esterification reaction to prepare an ionic polyester ester;
   wherein the first stage esterification reaction is carried out at a temperature of 230 °C, a pressure of 0.1 MPa, and a time of 4 h; the second stage esterification reaction is carried out at a temperature of 240 °C, a pressure of 0.3 MPa, and a time of 0.5 h;
   the molar ratio of the number of potassium 8-bis(2-hydroxyethoxy)carbonylanthracene oxaphosphite added in the first stage esterification reaction to the number of hydroxyl functional groups of sodium 2-[(tris(hydroxymethyl)methyl)amino]-1-ethanesulfonate is 1.15; in the second stage esterification reaction, only sodium 2-[(tris(hydroxymethyl)methyl)amino]-1-ethanesulfonate is added in an amount that is 0.3 of the molar amount of the potassium 8-bis(2-hydroxyethoxy)carbonylanthracene oxaphosphite added in the first stage esterification reaction; and in the first stage esterification reaction, benzenesulfonic acid is added as a catalyst in an amount of 20 ppm based on the mass of the potassium 8-bis(2-hydroxyethoxy)carbonylanthracene oxaphosphite;
(3) after mixing the nonionic polyester ester obtained in step (1) and the ionic polyester ester obtained in step (2) with polysiloxane, antimony trioxide is added, and a pre-polycondensation reaction is carried out at a temperature of 245 °C and a pressure of 900 Pa for 0.4 h, and then a final polycondensation reaction is carried out at a temperature of 275 °C and a pressure of 80 Pa for 2 h to obtain a self-healing polymer;
   wherein, based on the total mass of non-ionic polyester ester, ionic polyester ester and polysiloxane, the addition amount of ionic polyester ester is 20%, the addition amount of polysiloxane is 25%, and the addition amount of polycondensation catalyst is 400 ppm of the total mass of ionic polyester ester and non-ionic polyester ester;
   the prepared self-healing polymer is a block copolymer with an ordered structure, consisting of non-ionic polyester chain segments, ionic polyester chain segments and polysiloxane chain segments. The different segments in the non-ionic polyester chain segments, ionic polyester chain segments and polysiloxane chain segments, as well as the same segments, are connected by ester bonds. The two ends of the polysiloxane chain segments are terminated with hydroxyl groups;
   the self-healing polymer has a total of 12 blocks, an intrinsic viscosity of 0.60 dl/g, a half-crystallization time t_{1/2} of 4.1 min, and a crystallization enthalpy of 23 J/g; the nonionic polyester chain segment has 5 repeating units, the ionic polyester chain segment has 8 repeating units, and the polysiloxane chain segment has 9 repeating units;
(4) after mixing polybutylene terephthalate having an intrinsic viscosity of 1.25 dl/g with the self-healing polymer obtained in step (3), a polyester fiber uneasy to produce microplastics during use is prepared according to a process of melt extrusion, cooling, curing, oiling, and stretching;
   wherein the amount of self-healing polymer is 8% of the mass of fiber-grade polyesters;
   wherein the polyester fiber uneasy to produce microplastics during use has a single-filament fineness of 4.3 dtex, the oil-free intrinsic viscosity is reduced to 0.09 dl/g, the breaking strength is 4.8 cN/dtex, the elongation at break is 30%, the static friction coefficient is 0.1, the dynamic friction coefficient is 0.22, and the self-healing speed is 1 µm/min; compared with polyester fibers prepared without adding self-healing polymers, the microplastics in the fibers decrease by 95% during washing.

Example 4

A method for preparing a polyester fiber uneasy to produce microplastics during use, including the following steps:
(1) at a temperature of 220 °C and a pressure of 0.2 MPa, terephthalic acid and pentanediol with a molar ratio of 1:1.15 are esterified for 3 h to obtain a nonionic polyester ester;
   wherein the catalyst for the esterification reaction is antimony acetate, and its dosage is 90 ppm based on the mass of terephthalic acid;
(2) sodium 2-sulfoterephthalate and sodium 3-[N-tris(hydroxymethyl)methylamine]-2-hydroxypropanesulfonate are subjected to a staged esterification reaction to prepare an ionic polyester ester;
   wherein the first stage esterification reaction is carried out at a temperature of 245 °C, a pressure of 0.4 MPa, and a time of 4 h; the second stage esterification reaction is carried out at a temperature of 240 °C, a pressure of 0.4 MPa, and a time of 1 h;
   the molar ratio of the number of carboxyl functional groups of sodium 2-sulfoterephthalate added in the first stage esterification reaction to the number of hydroxyl functional groups of sodium 3-[N-tris(hydroxymethyl)methylamine]-2-hydroxypropanesulfonate is 1.4; in the second stage esterification reaction, only sodium 3-[N-tris(hydroxymethyl)methylamine]-2-hydroxypropanesulfonate is added in an amount that is 0.4 of the molar amount of sodium 2-sulfoterephthalate added in the first stage esterification reaction; and benzenesulfonic acid is added as a catalyst in the first stage esterification reaction in an amount of 80 ppm based on the mass of sodium 2-sulfoterephthalate;
(3) after mixing the nonionic polyester ester obtained in step (1) and the ionic polyester ester obtained in step (2) with polysiloxane, antimony ethylene glycol is added, and a pre-polycondensation reaction is carried out at a temperature of 255 °C and a pressure of 600 Pa for 0.8 h, and then a final polycondensation reaction is carried out at a temperature of 270 °C and a pressure of 20 Pa for 2.5 h to obtain a self-healing polymer;
   wherein, based on the total mass of nonionic polyester ester, ionic polyester ester and polysiloxane, the addition amount of ionic polyester ester is 5%, the addition amount of polysiloxane is 10%, and the addition amount of polycondensation catalyst is 100 ppm of the total mass of ionic polyester ester and nonionic polyester ester;
   the prepared self-healing polymer is a block copolymer with an ordered structure, consisting of non-ionic polyester chain segments, ionic polyester chain segments and polysiloxane chain segments. The different segments in the non-ionic polyester chain segments, ionic polyester chain segments and polysiloxane chain segments, as well as the same segments, are connected by ester bonds. The two ends of the polysiloxane chain segments are terminated with hydroxyl groups;
   the self-healing polymer has a total of 6 blocks, an intrinsic viscosity of 0.50 dl/g, a half-crystallization time t_{1/2} of 2.2 min, and a crystallization enthalpy of 37 J/g; the nonionic polyester chain segment has 9 repeating units, the ionic polyester chain segment has 2 repeating units, and the polysiloxane chain segment has 5 repeating units.
(4) after mixing the modified copolyester having an intrinsic viscosity of 0.66 dl/g with the self-healing polymer obtained in step (3), a polyester fiber uneasy to produce microplastics during use is prepared according to a process of melt extrusion, cooling, curing, oiling, and stretching;
   wherein the amount of self-healing polymer is 5% of the mass of fiber-grade polyesters;
   wherein the polyester fiber uneasy to produce microplastics during use has a single-filament fineness of 2.9 dtex, the oil-free intrinsic viscosity is reduced to 0.05 dl/g, the breaking strength is 4.7 cN/dtex, the elongation at break is 27%, the static friction coefficient is 0.18, the dynamic friction coefficient is 0.35, and the self-healing speed is 0.23 µm/min; compared with polyester fibers prepared without adding self-healing polymers, the microplastics in the fibers decrease by 64% during washing.

### Example 5

A method for preparing a polyester fiber uneasy to produce microplastics during use, including the following steps:
(1) at a temperature of 240°C and a pressure of 0.1 MPa, isophthalic acid and ethylene glycol with a molar ratio of 1:1.30 are esterified for 2 h to obtain a nonionic polyester ester;
   wherein the catalyst for the esterification reaction is antimony oxide, and its dosage is 80 ppm based on the mass of isophthalic acid;
(2) potassium 8-bis(2-hydroxyethoxy)carbonylanthracene oxaphosphite and potassium 2,5-dihydroxybenzenesulfonate are subjected to a staged esterification reaction to prepare an ionic polyester ester;
   wherein the first stage esterification reaction is carried out at a temperature of 235 °C, a pressure of 0.2 MPa, and a time of 4.5 h; the second stage esterification reaction is carried out at a temperature of 260 °C, a pressure of 0.35 MPa, and a time of 0.7 h;
   the molar ratio of the number of potassium 8-bis(2-hydroxyethoxy) carbonylanthracene oxaphosphite added in the first stage esterification reaction to the number of hydroxyl functional groups of potassium 2,5-dihydroxybenzenesulfonate is 1.25; in the second stage esterification reaction, only potassium 2,5-dihydroxybenzenesulfonate is added in an amount that is 0.5 of the molar amount of the potassium 8-bis(2-hydroxyethoxy)carbonylanthracene oxaphosphite added in the first stage esterification reaction; and in the first stage esterification reaction, benzenesulfonic acid is added as a catalyst in an amount of 40 ppm based on the mass of the potassium 8-bis(2-hydroxyethoxy)carbonylanthracene oxaphosphite;(3) after mixing the nonionic polyester ester obtained in step (1) and the ionic polyester ester obtained in step (2) with polysiloxane, antimony acetate is added, and a pre-polycondensation reaction is carried out at a temperature of 250 °C and a pressure of 800 Pa for 0.6 h, and then a final polycondensation reaction is carried out at a temperature of 265 °C and a pressure of 60 Pa for 2.5 h to obtain a self-healing polymer;
   wherein, based on the total mass of non-ionic polyester ester, ionic polyester ester and polysiloxane, the addition amount of ionic polyester ester is 12%, the addition amount of polysiloxane is 20%, and the addition amount of polycondensation catalyst is 300 ppm of the total mass of ionic polyester ester and non-ionic polyester ester;
   the prepared self-healing polymer is a block copolymer with an ordered structure, consisting of non-ionic polyester chain segments, ionic polyester chain segments and polysiloxane chain segments. The different segments in the non-ionic polyester chain segments, ionic polyester chain segments and polysiloxane chain segments, as well as the same segments, are connected by ester bonds. The two ends of the polysiloxane chain segments are terminated with hydroxyl groups;
   the self-healing polymer has a total of 8 blocks, an intrinsic viscosity of 0.70 dl/g, a half-crystallization time t_{1/2} of 2.7 min, and a crystallization enthalpy of 33 J/g; the nonionic polyester chain segment has 8 repeating units, the ionic polyester chain segment has 5 repeating units, and the polysiloxane chain segment has 8 repeating units;
(4) after mixing polyethylene terephthalate having an intrinsic viscosity of 0.71 dl/g with the self-healing polymer obtained in step (3), a polyester fiber uneasy to produce microplastics during use is prepared by melt extrusion, cooling, curing, oiling, and stretching;
   wherein the amount of self-healing polymer is 3% of the mass of fiber-grade polyester;
   wherein the polyester fiber uneasy to produce microplastics during use has a single-filament fineness of 2.1 dtex, the oil-free intrinsic viscosity is reduced to 0.03 dl/g, the breaking strength is 4.8 cN/dtex, the elongation at break is 23%, the static friction coefficient is 0.16, the dynamic friction coefficient is 0.33, and the self-healing speed is 0.34 µm/min; compared with polyester fibers prepared without adding self-healing polymers, the microplastics in the fibers decrease by 72% during washing.

### Example 6

A method for preparing a polyester fiber uneasy to produce microplastics during use, including the following steps:
(1) at a temperature of 150°C and a pressure of 0.01 MPa, adipic acid and propylene glycol with a molar ratio of 1:1.40 are esterified for 2.5 h to obtain a nonionic polyester ester;
   wherein the catalyst for the esterification reaction is titanium glycolate, and its dosage is 25 ppm based on the mass of adipic acid;
(2) sodium 5-sulfoisophthalate and sodium N,N-bis(2-hydroxyethyl)-2-aminoethanesulfonate are subjected to a staged esterification reaction to prepare an ionic polyester ester;
   wherein the first stage esterification reaction is carried out at a temperature of 240 °C, a pressure of 0.3 MPa, and a time of 5 h; the second stage esterification reaction is carried out at a temperature of 250 °C, a pressure of 0.5 MPa, and a time of 0.9 h;
   the molar ratio of the number of carboxyl functional groups of sodium 5-sulfoisophthalate added in the first stage esterification reaction to the number of hydroxyl functional groups of sodium N,N-bis(2- hydroxyethyl)-2-aminoethanesulfonate is 1.35; in the second stage esterification reaction, only sodium N,N-bis(2- hydroxyethyl)-2-aminoethanesulfonate is added in an amount that is 0.6 of the molar amount of sodium 5-sulfoisophthalate added in the first stage esterification reaction; and benzenesulfonic acid is added as a catalyst in the first stage esterification reaction in an amount of 60 ppm based on the mass of sodium 5-sulfoisophthalate;
(3) after mixing the nonionic polyester ester obtained in step (1) and the ionic polyester ester obtained in step (2) with polysiloxane, tetrabutyl titanate is added, and a pre-polycondensation reaction is carried out at a temperature of 240 °C and a pressure of 700 Pa for 0.5 h, and then a final polycondensation reaction is carried out at a temperature of 260 °C and a pressure of 50 Pa for 2 h to obtain a self-healing polymer;
   wherein, based on the total mass of non-ionic polyester ester, ionic polyester ester and polysiloxane, the addition amount of ionic polyester ester is 18%, the addition amount of polysiloxane is 15%, and the addition amount of polycondensation catalyst is 200 ppm of the total mass of ionic polyester ester and non-ionic polyester ester;
   the prepared self-healing polymer is a block copolymer with an ordered structure, consisting of non-ionic polyester chain segments, ionic polyester chain segments and polysiloxane chain segments. The different segments in the non-ionic polyester chain segments, ionic polyester chain segments and polysiloxane chain segments, as well as the same segments, are connected by ester bonds. The two ends of the polysiloxane chain segments are terminated with hydroxyl groups;
   the self-healing polymer has a total of 10 blocks, an intrinsic viscosity of 0.65 dl/g, a half-crystallization time t_{1/2} of 3.3 min, and a crystallization enthalpy of 29 J/g; the nonionic polyester chain segment has 7 repeating units, the ionic polyester chain segment has 7 repeating units, and the polysiloxane chain segment has 6 repeating units;
(4) after mixing poly(trimethylene terephthalate) having an intrinsic viscosity of 1.10 dl/g with the self-healing polymer obtained in step (3), a polyester fiber uneasy to produce microplastics during use is prepared according to a process of melt extrusion, cooling, curing, oiling, and stretching;
   wherein the amount of self-healing polymer is 6% of the mass of fiber-grade polyesters;
   wherein the polyester fiber uneasy to produce microplastics during use has a single-filament fineness of 3.8 dtex, the oil-free intrinsic viscosity is reduced to 0.07 dl/g, the breaking strength is 4.6 cN/dtex, the elongation at break is 29%, the static friction coefficient is 0.15, the dynamic friction coefficient is 0.31, and the self-healing speed is 0.55 µm /min; compared with polyester fibers prepared without adding self-healing polymers, the microplastics in the fibers decrease by 86% during washing.

## Claims

1. A method for preparing a polyester fiber uneasy to produce microplastics during use, comprising that: mixing a fiber-grade polyester with a self-healing polymer, and then carrying out melt extrusion, cooling, curing, oiling, and stretching processes to prepare a polyester fiber uneasy to produce microplastics during use;
wherein the self-healing polymer is a block copolymer having an ordered structure and is composed of non-ionic polyester chain segments, ionic polyester chain segments and polysiloxane chain segments; both different types of chain segments and the same type of chain segments in the non-ionic polyester chain segments, ionic polyester chain segments and polysiloxane chain segments are linked by ester bonds;
wherein two ends of the polysiloxane chain segment are hydroxyl-terminated;
wherein the repeating units of nonionic polyester chain segments are 4-10, the repeating units of the ionic polyester chain segment are 2-8, and the repeating units of the polysiloxane chain segment are 2-10;
wherein the preparation method of the self-healing polymer comprises: firstly synthesizing a nonionic polyester ester and an ionic polyester ester by an esterification reaction respectively, then mixing the nonionic polyester ester and the ionic polyester ester with a polysiloxane and subjecting the mixture to a polycondensation reaction to obtain a copolyester, namely the self-healing polymer;
wherein the ionic polyester ester is prepared by a staged esterification reaction of a dicarboxylic acid II and a diol II;
wherein a molar ratio of the number of carboxyl functional groups of dicarboxylic acid II added in the first stage esterification reaction to the number of hydroxyl functional groups of diol II is 1.05-1.50; in the second stage esterification reaction, only diol II is added, and the amount added is 0.1-0.6 of the molar amount of dicarboxylic acid II added in the first stage esterification reaction;
wherein the dicarboxylic acid II is sodium 5-sulfoisophthalate, sodium 2-sulfoterephthalate or potassium 8-bis(2-hydroxyethoxy) carbonylanthraceneoxaphosphite;
wherein the diol II is potassium 2,5-dihydroxybenzenesulfonate, sodium N,N-bis(2-hydroxyethyl)-2-aminoethanesulfonate, sodium 2-[(tris(hydroxymethyl)methyl)amino]-1-ethanesulfonate or sodium 3-[N-tris(hydroxymethyl)methylamino]-2-hydroxypropanesulfonate;
wherein a catalyst for the staged esterification reaction is benzenesulfonic acid, added during the first stage esterification reaction at a dosage of 10-100 ppm based on the mass of dicarboxylic acid II;
wherein the first stage esterification reaction is carried out at a temperature of 220-250 °C, a pressure of 0.05-0.5 MPa, and a time of 3.0-5.0 h;
wherein the second stage esterification reaction is carried out at a temperature of 240-260 °C, a pressure of 0.1-0.5 MPa, and a time of 0.5-1.0 h.

2. The method of claim 1, wherein the fiber-grade polyester is polyethylene terephthalate, polypropylene terephthalate, polybutylene terephthalate or a modified copolyester, and the mass fraction of polyester in the modified copolyester is ≥80%; wherein the intrinsic viscosity of the fiber-grade polyester is 0.60-1.25 dl/g.

3. The method of claim 1, wherein the total number of blocks in the self-healing polymer is 5-12, the intrinsic viscosity is 0.40-0.80 dl/g, the half-crystallization time t_{1/2} is 1.5-5.0 min, and the crystallization enthalpy is 20-40 J/g.

4. The method of claim 1, wherein the nonionic polyester ester is prepared by an esterification reaction of a dicarboxylic acid I and a diol I;
wherein the molar ratio of dicarboxylic acid I to diol I is 1:(1.05-1.50);
wherein the dicarboxylic acid I is terephthalic acid, isophthalic acid or adipic acid;
wherein the diol I is ethylene glycol, propylene glycol, butylene glycol or pentanediol;
wherein the catalyst for the esterification reaction is titanium glycolate, tetrabutyl titanate, antimony glycolate, antimony acetate or antimony oxide, and the amount used is 10-100 ppm based on the mass of dicarboxylic acid I;
wherein the esterification reaction is carried out at a temperature of 150-250 °C, a pressure of 0.01-0.5 MPa, and a time of 1.5-3.5 h.

5. The method of claim 1, comprising that based on the total mass of the nonionic polyester ester, the ionic polyester ester and the polysiloxane, the amount of the ionic polyester ester added is 5-20%, and the amount of the polysiloxane added is 5-30%.

6. The method of claim 1, wherein the polycondensation reaction is divided into a pre-polycondensation reaction and a final polycondensation reaction;
wherein the pre-polycondensation reaction is carried out at a temperature of 240-260 °C, a time of 0.1-1.0 h, and a pressure of 500-1000 Pa;
wherein the final polycondensation reaction is carried out at a temperature of 260-285 °C, a time of 1.5-3.0 h, and a pressure of 0-100 Pa;
wherein the polycondensation catalyst is tetrabutyl titanate, titanium glycol, antimony trioxide, antimony glycol or antimony acetate, added before the pre-polycondensation reaction in an amount of 50-500 ppm of the total mass of the ionic polyester ester and the non-ionic polyester ester.

7. The method of claim 1, wherein the amount of the self-healing polymer used is 1-10% of the mass of the fiber-grade polyester.

8. The method of claim 7, wherein the polyester fiber uneasy to produce microplastics during use has a single filament fineness of 1.5-5.0 dtex, and an oil-free filament has an intrinsic viscosity drop of 0.02-0.10 dl/g;
wherein the polyester fiber uneasy to produce microplastics during use has a breaking strength ≥4.5cN/ dtex, and an elongation at break of 15-35%;
wherein the polyester fiber uneasy to produce microplastics during use has a static friction coefficient ≤0.20, and a dynamic friction coefficient ≤0.40;
wherein the polyester fiber uneasy to produce microplastics during use has a self-healing rate of 0.1-1.0 µm/min, resulting in a 50-95% reduction in fiber microplastics during ishing compared to polyester fibers prepared without self-healing polymers.
